# EUROPÄISCHE PATENTSCHRIFT

(11) **EP 2 801 471 B1**
(45) Veröffentlichungstag und Bekanntmachung des Hinweises auf die Patenterteilung: **30.03.2016**
(21) Anmeldenummer: 14166495.3
(22) Anmeldetag: 30.04.2014
(51) Int. Cl.: B29C 65/16, B23K 26/064, G02B 27/09

(54) **Vorrichtung zum Durchstrahlschweißen innenliegender Umfangsflächen eines Werkstücks mittels Laserstrahlung**
Device for transmission welding of internal peripheral surfaces of a workpiece by means of laser radiation
Dispositif de soudage par transmission de surfaces circonférentielles internes d'une pièce au moyen d'un rayonnement laser

(30) Priorität: 06.05.2013 DE 102013104599
(43) Veröffentlichungstag der Anmeldung: 12.11.2014
(73) Patentinhaber: JENOPTIK Automatisierungstechnik GmbH, 07745 Jena (DE)
(72) Erfinder: Wollmann, Werner, 07747 Jena (DE); Scheller, Torsten, 07749 Jena (DE); Langebach, Dr. Jan, 07551 Gera (DE); Wittenbecher, Wolfgang, 07768 Gumperda (DE)
(74) Vertreter: Schaller, Renate

(56) Entgegenhaltungen:
- WO-A1-2005/070610

## Beschreibung

Die Erfindung betrifft eine Vorrichtung zum Durchstrahlschweißen innenliegender Umfangsflächen eines Werkstücks mittels Laserstrahlen, wie sie gattungsgemäß aus der US 7 368 681 B2 bekannt ist.

Das Verbinden von Werkstückteilen aus Kunststoff mittels Durchstrahlschweißen zu einem Werkstück erfolgt, wie aus dem Stand der Technik bekannt, im Wesentlichen durch die Verwendung von Laserstrahlung. Dazu besteht eines der zu verschweißenden Werkstückteile aus einem für die Laserstrahlung transparenten und das andere aus einem die Laserstrahlung absorbierenden Kunststoff. Zum Verbinden der beiden Werkstückteile werden diese über zwei innenliegende Umfangsflächen in direkten Kontakt zueinander gebracht. Zum Schweißen wird die Laserstrahlung durch das transparente auf das absorbierende Werkstückteil gerichtet, wodurch letzteres durch Absorption der Laserstrahlen oberflächlich aufschmilzt. Durch Wärmeleitung wird die Temperatur der Schmelze auch auf das transparente Werkstückteil übertragen, wodurch der transparente Kunststoff ebenfalls anschmilzt und sich im Bereich der Schweißnaht mit dem absorbierenden Werkstückteil verbindet.

Eine für das Durchstrahlschweißen an innenliegenden Umfangsflächen geeignete Vorrichtung ist in der Patentschrift US 7 368 681 B2 offenbart. Die Vorrichtung umfasst eine Vielzahl von Laserstrahlquellen, mit denen zeitgleich eine Umfangslinie entlang einer in sich geschlossenen Schweißnaht mit Laserstrahlung beaufschlagt werden soll. Die Laserstrahlquellen sind mit gleichen Abständen zueinander so auf einer Kreislinie angeordnet, dass die Strahlachse des jeweils von ihnen ausgehenden divergenten Laserstrahls radial zum Mittelpunkt der Kreislinie gerichtet ist. Als Laserstrahlquellen werden vorzugsweise Diodenlaser verwendet, die in der Ebene der Kreislinie eine vergrößerte Divergenz aufweisen.

Zum Schweißen werden in der Vorrichtung zwei kegelstumpfförmige Spiegelelemente eingesetzt, deren Körperachsen koaxial zueinander durch den Mittelpunkt und senkrecht zur Ebene der Kreislinie verlaufen. In der Ebene der Kreislinie ist dazu ein erstes, axial verstellbares Spiegelelement angeordnet, an dessen reflektierender Mantelfläche die Strahlachsen der radial einfallenden Laserstrahlen in axialer Richtung umgelenkt werden. In Richtung der axial umgelenkten Strahlachsen ist im Inneren des Werkstücks, spiegelverkehrt zum ersten Spiegelelement, ein zweites Spiegelelement angeordnet, an dessen reflektierender Mantelfläche die Strahlachsen wieder in radiale Richtung umgelenkt werden. Die vom Mittelpunkt weg gerichteten Strahlachsen bilden parallel zur Ebene der Kreislinie eine Schweißebene aus, in der die Umfangslinie des Werkstücks liegt, entlang der die Schweißnaht ausgebildet wird. Das Werkstück kann damit über zwei innenliegende Umfangsflächen verschweißt werden. Eine Anpassung der Vorrichtung an einen sich ändernden Abstand zwischen der Ebene der Kreislinie und der Lage der Schweißnaht im Inneren des Werkstücks erfolgt durch eine axiale Verstellung des ersten Spiegelelements, wobei es zusammen mit den Laserstrahlquellen gegenüber dem zweiten Spiegelelement bewegt wird.

Soll mit dieser Vorrichtung eine für gasförmige oder flüssige Medien dichte Schweißnaht hergestellt werden, ist es notwendig, die Schweißnähte mit hoher Zuverlässigkeit unterbrechungsfrei herzustellen. Dazu ist es erforderlich, dass die Laserstrahlen der einzelnen Laserstrahlquellen an den innenliegenden Umfangsflächen ineinander übergehen. Die zur Verwendung beschriebenen Diodenlaser sind dafür prinzipiell gut geeignet, da sie eine für Laserstrahlung relativ große Divergenz aufweisen. Problematisch ist aber die zweifache 90°-Umlenkung der Laserstrahlen an den beiden Spiegelelementen. Durch das divergente Auftreffen der Laserstrahlen auf die Spiegelelemente, bei dem der größte Anteil des Laserstrahls in nicht radialer Richtung auf die reflektierende Mantelfläche auftrifft und aufgrund der in zwei Raumrichtungen angewinkelten Mantelflächen der kegelstumpfförmigen Spiegelelemente, werden die Laserstrahlen beim jedem Auftreffen und Umlenken an den Spiegelelementen verzerrt. In Abhängigkeit von den Abständen zwischen Laserstrahlquelle, Spiegelelementen und Werkstück kann die Verzerrung dazu führen, dass an der innenliegenden Umfangsfläche des Werkstücks kein Übergang zwischen den Laserstrahlen der einzelnen Laserstrahlquellen hergestellt werden kann und dass Strahlungsverluste auftreten, da Anteile der Laserstrahlen nach der Reflexion am ersten Spiegelelement nicht mehr auf dem zweiten Spiegelelement auftreffen. Um ineinander übergehende Laserstrahlen abzubilden bzw. Strahlungsverluste zu vermeiden, dürfen die Laserstrahlen bei der Vorrichtung gemäß der vorgenannten Patentschrift US 7 368 681 B1 eine nur begrenzte Strahldivergenz aufweisen, sodass die vom ersten Spiegelelement reflektierten Laserstrahlen vollständig auf das zweite Spiegelelement auftreffen und möglichst als eine aus der Vielzahl einzelner Laserstrahlen zusammengesetzte Linie auf den innenliegenden Umfangsflächen abgebildet werden. Dazu müsste das linienförmige Laserstrahlprofil des Diodenlasers mit optischen Mitteln zu einem mehr punktförmigen Laserstrahlprofil geformt werden. Mit zunehmender Umfangsgröße des Werkstücks ist daher eine unverhältnismäßig hohe Anzahl an Laserstrahlquellen erforderlich, um die unterbrechungsfreie Schweißnaht zu erzeugen.

Der Erfindung liegt die Aufgabe zugrunde, eine Vorrichtung zu schaffen, mit der innenliegende Umfangsflächen von Werkstücken, mit einer möglichst geringen Anzahl an Laser-Optik-Modulen, mediendicht verschweißt werden können.

Erfindungsgemäß wird die Aufgabe gelöst, mit einer Vorrichtung gemäß Anspruch 1. Vorteilhafte Ausführungen sind in den Unteransprüchen angegeben.

Nachfolgend soll die Erfindung anhand von Ausführungsbeispielen näher erläutert werden. In den zugehörigen Zeichnungen zeigen:

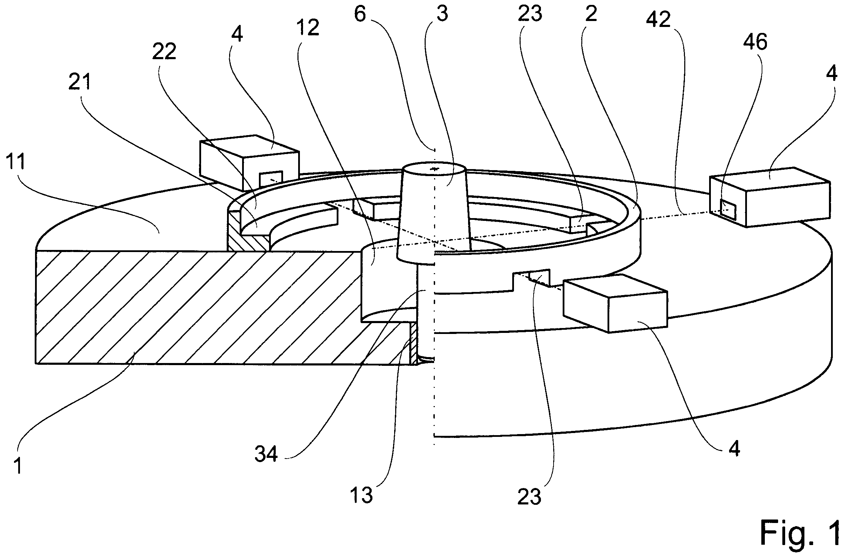

- Fig. 1: den prinzipiellen Aufbau einer Vorrichtung zum Durchstrahlschweißen,
- Fig. 2a: einen beispielhaften Strahlverlauf eines an einem großen Radius des konischen Spiegelelements reflektierten Laserstrahls in einer seitlichen Schnittansicht eines Teils der Vorrichtung,
- Fig. 2b: einen beispielhaften Strahlverlauf eines an einem großen Radius des konischen Spiegelelements reflektierten Laserstrahls in einer Teilansicht von oben,
- Fig. 3a: einen beispielhaften Strahlverlauf eines an einem kleinen Radius des konischen Spiegelelements reflektierten Laserstrahls in einer seitlichen Schnittansicht eines Teils der Vorrichtung und
- Fig. 3b: einen beispielhaften Strahlverlauf eines an einem kleinen Radius des konischen Spiegelelements reflektierten Laserstrahls in einer Teilansicht von oben.

Eine Vorrichtung zum Durchstrahlschweißen innenliegender Umfangsflächen 53 eines Werkstücks 5 mittels Laserstrahlen 41 enthält grundsätzlich eine Trägerplatte 1 zur Befestigung einer Aufnahme 2 für ein Werkstück 5, ein konisches Spiegelelement 3 und mehrere Laser-Optik-Module 4. Die Laser-Optik-Module 4 bestehen jeweils aus einem Hochleistungsdiodenlaser (im Folgenden als HLDL bezeichnet) und einer Strahlformungsoptik, die auf einer Kreislinie 7 mit gleichen Abständen zueinander und zu einem Mittelpunkt der Kreislinie 7 angeordnet sind. Als Bezugsbasis der Abstände zum Mittelpunkt der Kreislinie 7 kann jeweils eine Strahlaustrittsfläche 46 verstanden werden, als Bezugsbasis für Abstände zueinander kann eine Strahlachse 42 der Laser-Optik-Module 4 verstanden werden. Die Laser-Optik-Module 4 emittieren jeweils einen divergenten Laserstrahl 41 mit der Strahlachse 42 in einer Abstrahlebene 8 und radial zum Mittelpunkt der Kreislinie 7.

Das konische Spiegelelement 3 weist eine Körperachse auf, die senkrecht zu der Abstrahlebene 8 und durch den Mittelpunkt der Kreislinie 7 angeordnet ist, wobei ein Konuswinkel α des Spiegelelements 3 kleiner 30° ist, sodass die auftreffenden Laserstrahlen 41 direkt in eine Schweißebene 9, die einen Schweißabstand A zu der Abstrahlebene 8 aufweist, auf die innenliegenden Umfangsflächen 53 des in der Aufnahme 2 aufgenommenen Werkstücks 5 reflektiert werden.

In einem ersten Ausführungsbeispiel ist die Trägerplatte 1 eine kreisförmige Platte aus einem steifen und laserfesten Material, z. B. aus Metall. In einer Oberfläche 11 der Trägerplatte 1 ist co-axial zu einer senkrecht zur Oberfläche 11 orientierten Symmetrieachse 6 der Trägerplatte 1 eine zylinderförmige Vertiefung 12 eingebracht. In der zylinderförmigen Vertiefung 12 ist das konische Spiegelelement 3 angeordnet.

Das konische Spiegelelement 3 ist ein rotationssymmetrischer Körper dessen Körperachse co-axial zur Symmetrieachse 6 orientiert ist. Es weist zwischen einer kreisförmigen Grundfläche 32 und einer vergleichsweise kleineren kreisförmigen Deckfläche 33 eine reflektierende Mantelfläche 31 mit dem festgelegten Konuswinkel α auf. An der Grundfläche 32 ist das Spiegelelement 3 mit einem co-axial zur Körperachse angeordneten, zylindrischen Halter 34 verlängert. Der Halter 34 ist am Boden der Vertiefung 12 axial entlang der Symmetrieachse 6 beweglich in einer Verstelleinrichtung 13 an der Trägerplatte 1 aufgenommen.

Auf der Oberfläche 11 der Trägerplatte 1 sind die Laser-Optik-Module 4 kreisförmig und gleichmäßig um die Symmetrieachse 6 verteilt angeordnet. Die Laser-Optik-Module 4 sind jeweils mit der Strahlachse 42 des von ihnen ausgehenden Laserstrahls 41 in radialer Richtung zur Symmetrieachse 6 ausgerichtet, sodass sich die Strahlachsen 42 auf der Symmetrieachse 6 schneiden. Die Strahlachsen 42 verlaufen alle in der parallel und in einem festgelegten Abstand zur Oberfläche 11 liegenden Abstrahlebene 8. Die Laserstrahlen 41 treffen auf die reflektierende Mantelfläche 31 des konischen Spiegelelements 3 auf und werden direkt auf das Werkstück 5 reflektiert, wobei die Strahlachsen 42 in der Schweißebene 9 auf das Werkstück 5 auftreffen, die von der Oberfläche 11 um den Schweißabstand A weiter entfernt ist als die Abstrahlebene 8.

Zwischen den Laser-Optik-Modulen 4 und dem konischen Spiegelelement 3 ist co-zentrisch zur Symmetrieachse 6 die Aufnahme 2 auf der Oberfläche 11 befestigt. Die Aufnahme 2 ist ringförmig, in Form eines L-Profils ausgeführt. Das L-Profil wird aus einem an der Oberfläche 11 anliegenden Auflagering und einem innerhalb des Außendurchmessers des Auflagerings auf dem Auflagering aufsitzenden Zentrierring gebildet. Der Auflagering ist mindestens so hoch, dass eine von der Oberfläche 11 abgewandte Auflagefläche 21 des Auflagerings oberhalb der Abstrahlebene 8 liegt. Die Auflagefläche 21 ist parallel zur Oberfläche 11 orientiert. Entsprechend der Anzahl und der Anordnung der Laser-Optik-Module 4 sind in den Auflagering unterhalb der Auflagefläche 21 radiale Strahldurchlässe 23 eingebracht, die in der Abstrahlebene 8 den ungehinderten Durchtritt der Laserstrahlen 41 durch die Aufnahme 2 ermöglichen. Der Innendurchmesser des Zentrierrings ist kleiner als der Außendurchmesser des Auflagerings und wird als eine Zentrierfläche 22 für das Werkstück 5 verwendet. An der Auflagefläche 21 und der Zentrierfläche 22 wird das Werkstück 5 in der Vorrichtung ausgerichtet.

Das Durchstrahlschweißen wird bei achssymmetrischen Werkstücken 5 angewendet, bei denen im Inneren eines die Laserstrahlen 41 absorbierenden Werkstückteils 52 ein für die Laserstrahlen 41 transparentes Werkstückteil 51 angeordnet ist, das ausschließlich vom Inneren des Werkstücks 5 her für das Schweißen zugänglich ist.

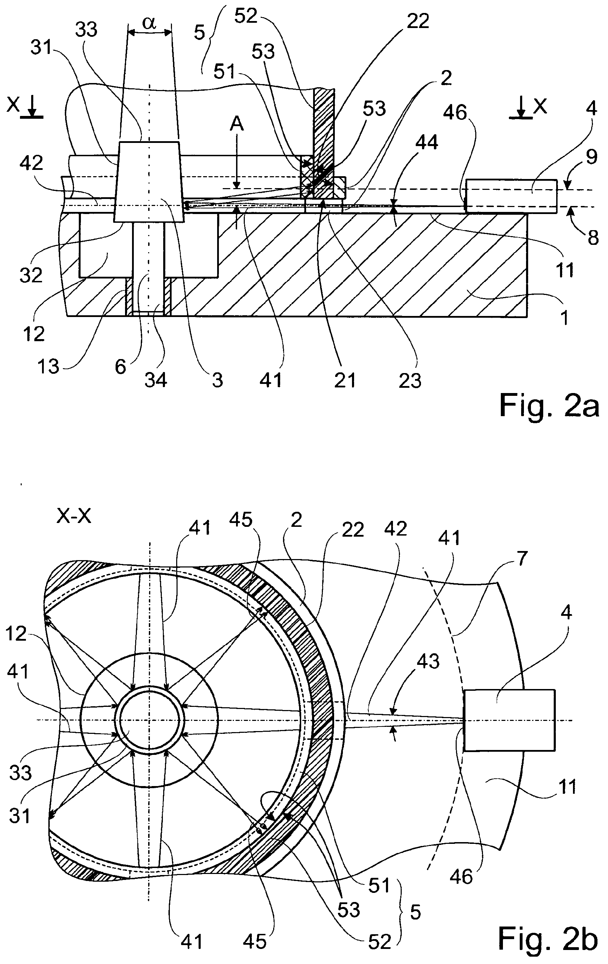

In der Fig. 2a und in Fig. 2b, in einer durch das Werkstück 5 führenden Schnittebene X-X, ist sowohl das transparente als auch das absorbierende Werkstückteil 51/52 in Form eines dünnwandigen Hohlzylinders ausgeführt. Das transparente Werkstückteil 51 ist in das absorbierende Werkstückteil 52 eingeschoben, sodass sich beide Werkstückteile 51/52, zumindest in einem umlaufenden Abschnitt von sich gegenüberstehenden Flächen, direkt berühren. An den aneinanderliegenden Flächen bilden die Werkstückteile 51/52 die zu verschweißende, innenliegende Umfangsfläche 53 aus.

Die ineinander geschobenen Werkstückteile 51/52 werden in die Aufnahme 2 eingesetzt, sodass beide Werkstückteile 51/52 mit einer zur Vorrichtung weisenden Stirnfläche unmittelbar auf der Auflagefläche 21 aufliegen und das Werkstück 5 in axialer Richtung zur Schweißebene 9 positioniert ist (Fig. 2a). Das absorbierende Werkstückteil 52 liegt außerdem unmittelbar an der Zentrierfläche 22 an, wodurch die innenliegenden Umfangsflächen 53 in radialer Richtung, co-zentrisch zum Spiegelelement 3 ausgerichtet ist (Fig. 2b). Für eine genaue Positionierung des Werkstücks 5 ist die Aufnahme 2 grundsätzlich an die Abmessungen des Werkstücks 5 angepasst.

Zum Schweißen werden in der Vorrichtung die besonderen Abstrahleigenschaften der vorteilhaft für das Durchstrahlschweißen von Kunststoffen geeigneten HLDL ausgenutzt. Die HLDL strahlen in zwei senkrecht zueinander orientierten und durch die Strahlachse 42 verlaufenden Ebenen mit unterschiedlichen Strahldivergenzwinkeln ab. In der als "fast-axis" 44 bezeichneten Ebene ist die Strahldivergenz um ein Vielfaches größer als in der anderen als "slow-axis" 43 bezeichneten Ebene. Insbesondere zur Reduktion der Strahldivergenz der fast-axis 44 ist die Strahlformungsoptik vorgeordnet, mit welcher der Strahldivergenzwinkel auf etwa 0,5° reduziert wird. Der Strahldivergenzwinkel der slow-axis 43 wird unverändert bei etwa 3,5° belassen. Nach dem Durchtritt durch die Strahlformungsoptik weist die slow-axis 43 des Laserstrahls 41 somit eine größere Divergenz als die fast-axis 44 auf.

Die Laser-Optik-Module 4 werden so auf der Trägerplatte 1 montiert, dass die fast-axis 44 vertikal zur Oberfläche 11 in einer senkrechten Ebene und die slow-axis 43 parallel zur Oberfläche 11 in der Abstrahlebene 8 orientiert ist. Der Laserstrahl 41 weist dadurch ein nahezu linienförmig in der Abstrahlebene 8 verlaufendes Strahlprofil auf. Wie in Fig. 2a in einer teilweisen Schnittansicht der Vorrichtung von der Seite zu erkennen, besitzt der Laserstrahl 41 in der senkrechten Ebene eine wesentlich geringere Divergenz als in der in Fig. 2b dargestellten Abstrahlebene 8.

Die von den Laser-Optik-Modulen 4 ausgehenden Laserstrahlen 41 treten jeweils unterhalb des in der Aufnahme 2 positionierten Werkstücks 5 durch die Strahldurchlässe 23 der Aufnahme 2 hindurch und treffen auf dem Spiegelelement 3 auf. An der reflektierenden Mantelfläche 31 werden die Laserstrahlen 41 entsprechend dem Konuswinkel α so umgelenkt, dass sie in der Schweißebene 9 direkt auf die innenliegende Umfangsfläche 53 gerichtet sind. Damit verläuft die Schweißebene 9 entsprechend dem Konuswinkel α an den Stellen durch die innenliegenden Umfangsflächen 53 des Werkstücks 5, an denen die Laserstrahlen 41 auf die innenliegenden Umfangsflächen 53 auftreffen und eine Schweißnaht ausbilden.

Wie in Fig. 2a an der Abstrahlung eines einzelnen Laser-Optik-Moduls 4 in einer zur Abstrahlebene 8 senkrechten Ebene dargestellt, trifft der Laserstrahl 41 auf die entsprechend dem Konuswinkel α geneigte Mantelfläche 31 auf. Dadurch erfolgt in der senkrechten Ebene vorrangig die Ablenkung des Laserstrahls 41 aus der Abstrahlebene 8.

In der parallel zur Oberfläche 11 orientierten Abstrahlebene 8 trifft der Laserstrahl 41, wie in Fig. 2b gezeigt, in einem konvexen Umfangssegment des Spiegelelements 3 auf der Mantelfläche 31 auf, sodass in der Schweißebene 9 eine vom Radius des Spiegelelements 3 abhängige Aufweitung des Laserstrahls 41 erfolgt.

Der Konuswinkel α ist an die Dimensionen des Werkstücks 5 bzw. des Spiegelelements 3 und an einen werkstückspezifischen Schweißabstand A zwischen den an der Auflagefläche 21 aufliegenden Stirnflächen und der zu verschweißenden innenliegenden Umfangsflächen 53 des Werkstücks 5 angepasst. Der Schweißabstand A wird möglichst gering gehalten, sodass sich die Schweißnaht in der Nähe der Stirnflächen des Werkstücks 5 befindet. Dementsprechend werden auch am Spiegelelement 3 möglichst kleine Konuswinkel α im Bereich von bis zu 30° verwendet. Gegenüber größeren Konuswinkeln α haben die kleinen Konuswinkel α den Vorteil das die in der Abstrahlebene 8 mit dem größeren Divergenzwinkel auf der Mantelfläche 31 auftreffenden Laserstrahlen 41 bei der Reflexion in die Schweißebene 9 kaum verzerrt werden. Das trifft insbesondere für weit von der Strahlachse 42 entfernte Anteile der Laserstrahlen 41 zu, die mehr in einer tangentialen als in radialer Richtung auf das Umfangssegment des Spiegelelements 3 auftreffen. Je größer der Konuswinkel α und je weiter die tangential gerichteten Anteile von der Strahlachse 42 entfernt sind, umso mehr werden die reflektierten Strahlanteile in der Schweißebene 9 bogenförmig verzerrt abgebildet. Gegenüber dem Stand der Technik kann durch die kleinen Konuswinkel α, die vorteilhaft im Bereich von 2° bis 10° liegen, das nahezu linienförmige Strahlprofil der Laserstrahlen 41 fast unverzerrt in der Schweißebene 9 auf die innenliegenden Umfangsflächen 53 abgebildet werden.

In Fig. 2b ist ein einzelnes Laser-Optik-Modul 4 mit vollständigem Verlauf des Laserstrahls 41 sichtbar. Innerhalb des Werkstücks 5 sind zusätzlich die Verläufe der Laserstrahlen 41 von vier, in Fig. 2b nicht sichtbaren und jeweils um 90° um die Aufnahme 2 versetzt angeordneten Laser-Optik-Modulen 4, dargestellt. Es ist zu erkennen, dass sich kurz vor dem Auftreffen der vier am Spiegelelement 3 reflektierten Laserstrahlen 41 auf den innenliegenden Umfangsflächen 53 ein kleiner Überlappungsbereich 45 zwischen benachbarten Laserstrahlen 41 ausbildet. Der Überlappungsbereich 45 ist notwendig, da die einzelnen Laserstrahlen 41 in der Regel eine gausförmige Intensitätsverteilung aufweisen, wobei die Intensität ausgehend von der Strahlachse 42 zum Rand des Laserstrahls 41 hin kontinuierlich abnimmt. Die fehlende Intensität wird ausgeglichen indem die Ränder zweier Laserstrahlen 41 überlagert werden, sodass auch in diesen Bereichen die Ausbildung einer geschlossenen und damit mediendichten Schweißnaht gewährleistet ist.

Anhand des Überlappungsbereichs 45 ist weiterhin erkennbar, dass es für das zeitgleiche Schweißen (das sogenannte Simultanschweißen) des dargestellten Werkstücks 5 ausreichend ist, vier um 90° versetzte Laser-Optik-Module 4 zu verwenden, mit denen die geschlossene Schweißnaht hergestellt werden kann.

Die Aufweitung der Laserstrahlen 41 in der Schweißebene 9 und damit die Größe des Überlappungsbereichs 45 ist durch das axial bewegliche Spiegelelement 3 veränderbar. Das Spiegelelement 3 ist dazu über den Halter 34 in der Verstelleinrichtung 13 der Trägerplatte 1 aufgenommen. Dadurch lässt es sich gegenüber der Abstrahlebene 8 stufenlos zwischen einer unteren und einer oberen Position verstellen. In der unteren Position befindet sich das Spiegelelement 3 mit der Deckfläche 33 knapp oberhalb der Abstrahlebene 8, sodass das Spiegelelement 3 fast vollständig in der Vertiefung 12 der Trägerplatte 1 versenkt ist. In der oberen Position befindet es sich mit der Grundfläche 32 knapp unterhalb der Abstrahlebene 8, sodass das Spiegelelement 3 fast vollständig aus der Vertiefung 12 heraus steht.

In einer vorteilhaften Ausführung wird der Radius des Spiegelelements 3 in der Mitte zwischen Grundfläche 32 und Deckfläche 33 des Spiegelelements 3 so auf einen Werkstückdurchmesser optimiert, dass in einer Mittelstellung zwischen oberer und unterer Position ein mittelgroßer Überlappungsbereich 45 auf den innenliegenden Umfangsflächen 53 erreicht wird, der in Richtung einer zunehmenden oder abnehmenden Überlappung optimiert werden kann.

Als Verstelleinrichtung 13 wird im einfachsten Fall eine Gewindeverbindung verwendet, in der sich der ebenfalls mit einem Gewinde versehene Halter 34 zusammen mit dem Spiegelelement 3 ein- und ausschrauben lässt. Es können auch Linearantriebe jeglicher Form verwendet werden, die den Halter 34 bereits ausbilden, an dem das konische Spiegelelement 3 befestigt ist.

Bei der in Fig. 2a und 2b dargestellten oberen Position des Spiegelelements 3 trifft der Laserstrahl 41 nahe der Grundfläche 32 auf der Mantelfläche 31 mit vergleichsweise großem Radius auf. Da Ein- und Ausfallswinkel des Laserstrahls 41 gegenüber einem Lot auf der Mantelfläche 31 klein sind, ist die Aufweitung um die Schweißebene 9 ebenfalls vergleichsweise gering. Wie zuvor beschrieben, ist der Überlappungsbereich 45 wegen der vergleichsweise geringen Aufweitung klein.

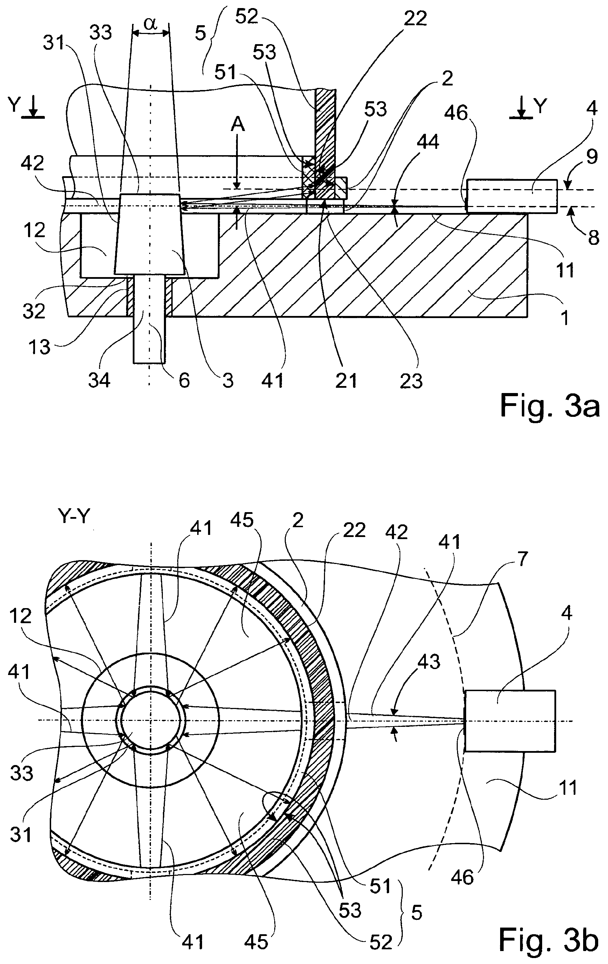

In der Fig. 3a und in Fig. 3b, in einer durch das Werkstück 5 führenden Schnittebene Y-Y, ist das Spiegelelement 3 in der unteren Position dargestellt. In dieser Position trifft der Laserstrahl 41 nahe der Deckfläche 33 auf der Mantelfläche 31 mit vergleichsweise kleinem Radius auf. Wie in Fig. 3a dargestellt, hat die axiale Verstellung aufgrund des unveränderten Konuswinkels α keine sichtbare Auswirkung auf die Lage der Schweißebene 9 in der senkrechten Ebene.

In der in Fig. 3b dargestellten Abstrahl- und Schweißebene 8 und 9 ist die Aufweitung der Laserstrahlen 41 vergleichsweise stark, da die Ein- und Ausfallswinkel des Laserstrahls 41 gegenüber dem Lot auf der Mantelfläche 31 groß sind. Durch die starke Aufweitung ist der Überlappungsbereich 45 mit den benachbarten Laserstrahlen 41 ebenfalls groß.

Die axiale Verstellung des Spiegelelements 3 gegenüber der Abstrahlebene 8 und die Festlegung der Radien und des Konuswinkels α erlaubt eine nahezu beliebige Einstellung der Größe des Überlappungsbereichs 45 der Laserstrahlen 41 in der Schweißebene 9 und damit eine sichere Ausführung der in sich geschlossenen und mediendichten Schweißnaht.

Wie in Fig. 2b und 3b erkennbar, ist es bei dem Durchmesser der innenliegenden Umfangsflächen 53 des dargestellten Werkstücks 5 ausreichend, wenn vier um 90° versetzte Laser-Optik-Module 4 verwendet werden. Die mit den vier Laser-Optik-Modulen 4 erzeugbaren Überlappungsbereiche 45 sind zur Ausführung der geschlossenen Schweißnaht ausreichend. Je weniger Laser-Optik-Module 4 eingesetzt werden umso geringer sind die Kosten für den Betrieb der Vorrichtung. Bei größeren oder kleineren Durchmessern der innenliegenden Umfangsflächen 53 kann in weiteren Ausführungen der Vorrichtung die Anzahl und die Anordnung der Laser-Optik-Module 4 angepasst werden.

Die Verwendung einer größeren Anzahl an Laser-Optik-Modulen 4 ist von Vorteil, wenn ein Spiegelelement 3 mit vergleichsweise großem Konuswinkel α verwendet wird. Dieser ist erforderlich, wenn sich die innenliegende Umfangsfläche 53 und damit die Schweißebene 9 tiefer im Inneren des Werkstücks 5 befindet und die Umfangsfläche 53 somit einen vergleichsweise großen Schweißabstand A aufweist. Unter ansonsten unveränderten Bedingungen führt der größere Konuswinkel α dazu, dass in der Abstrahlebene 8 weit von der Strahlachse 42 entfernte Anteile des Laserstrahls 41, die mehr in tangentialer als in radialer Richtung auf den Radius der Mantelfläche 31 auftreffen, nicht mehr linienförmig auf den innenliegenden Umfangsflächen 53 in der Schweißebene 9 abgebildet werden können, sondern bogenförmig verzerrt sind. Dadurch ist es nicht mehr möglich, den Überlappungsbereich 45 definiert einzustellen. Gegenüber einer geringen Anzahl an Laser-Optik-Modulen 4 macht hier die Verwendung der größeren Anzahl an Laser-Optik-Modulen 4 Sinn. Dadurch kann der zur Herstellung der geschlossenen Schweißnaht erforderliche Strahldivergenzwinkel in der Abstrahlebene 8, z. B. mit optischen Mitteln, reduziert werden, wodurch die bogenförmigen Verzerrungen eingeschränkt werden. Der reduzierte Strahldivergenzwinkel verkleinert jedoch auch den Überlappungsbereich 53. Zum Ausgleich wird die Anzahl der Laser-Optik-Module 4 erhöht und wenn möglich der Abstand zwischen dem Laser-Optik-Modul 4 und den innenliegenden Umfangsflächen 53 reduziert. Die geschlossene Schweißnaht wird dann durch die größere Anzahl an Laserstrahlen 41 erreicht.

In einer anderen Ausführung kann, trotz eines vergleichsweise großen Schweißabstandes A einer tief im Inneren des Werkstücks 5 liegenden Schweißnaht, eine möglichst geringe Anzahl an Laser-Optik-Modulen 4 beibehalten werden. Das wird ermöglicht, indem zwischen den Laser-Optik-Modulen 4 und dem konischen Spiegelelement 3 geeignete Optiken eingesetzt werden. Die geeigneten Optiken bilden die Laserstrahlen 41 linienförmig in der Schweißebene 9 ab, indem sie der bogenförmigen Verzerrung der weit von der Strahlachse 42 entfernten Anteile der Laserstrahlen 41 entgegenwirken.

Aufgrund der Divergenz der Laserstrahlen 41 ist es neben der axialen Verstellung des Spiegelelements 3 auch möglich, die Laser-Optik-Module 4 zur Einstellung des Überlappungsbereichs 45 zu verwenden. In einer Ausführung der Vorrichtung können dazu die Laser-Optik-Module 4 entlang der Strahlachse 42 in radialer Richtung verschoben werden, sodass sich der Abstand zur Symmetrieachse 6 ändert. Ein geringerer Abstand verkleinert und ein größerer Abstand vergrößert die Aufweitung der Laserstrahlen 41 in der Abstrahlebene.

Um beim Schweißen von Werkstücken 5 mit wesentlich größerem Durchmesser die Strahlformungsoptik ohne eine Anpassung an den größeren Durchmesser verwenden zu können, wird in einem anderen Ausführungsbeispiel die Mantelfläche 31 leicht konkav ausgeformt. Das Spiegelelement 3 erreicht damit in der senkrechten Ebene der fast-axis 44 eine fokussierende Wirkung. Durch die fokussierende Wirkung wird die durch den größeren Abstand zwischen Laser-Optik-Modul 4 und innenliegenden Umfangsflächen 53 auftretende Zunahme der Aufweitung des Laserstrahls 41 verringert und in größeren Entfernungen eine schmalere Schweißnaht erreicht.

### Bezugszeichenliste

- 1: Trägerplatte
- 11: Oberfläche
- 12: Vertiefung
- 13: Verstelleinrichtung
- 2: Aufnahme
- 21: Auflagefläche
- 22: Zentrierfläche
- 23: Strahldurchlass
- 3: konisches Spiegelelement
- 31: reflektierende Mantelfläche
- 32: Grundfläche
- 33: Deckfläche
- 34: Halter
- α: Konuswinkel
- 4: Laser-Optik-Modul
- 41: Laserstrahl
- 42: Strahlachse
- 43: slow-axis
- 44: fast-axis
- 45: Überlappungsbereich
- 46: Strahlaustrittsfläche
- 5: Werkstück
- 51: transparentes Werkstückteil
- 52: absorbierendes Werkstückteil
- 53: innenliegende Umfangsfläche
- A: Schweißabstand
- 6: Symmetrieachse
- 7: Kreislinie
- 8: Abstrahlebene
- 9: Schweißebene

## Patentansprüche

1. Vorrichtung zum Durchstrahlschweißen an zwei innenliegenden Umfangsflächen eines Werkstücks (5)
mittels Laserstrahlen (41) mit mehreren Laser-Optik-Modulen (4), jeweils bestehend aus einem Hochleistungsdiodenlaser und einer Strahlformungsoptik, die auf einer Kreislinie (7) mit gleichen Abständen zueinander und zum Mittelpunkt der Kreislinie (7) angeordnet sind und jeweils einen divergenten Laserstrahl (41) mit einer Strahlachse (42) in einer Abstrahlebene (8) radial zum Mittelpunkt der Kreislinie (7) emittieren, einer rotationssymmetrischen Umlenkoptik, deren Körperachse senkrecht zu der Abstrahlebene (8) und durch den Mittelpunkt der Kreislinie (7) verlaufend angeordnet ist und
einer Aufnahme (2), um das Werkstück (5) mit zwei innenliegenden achssymmetrischen Umfangsflächen mit seiner Symmetrieachse (6) koaxial zur Körperachse der rotationssymmetrischen Umlenkoptik anordnen zu können, **dadurch gekennzeichnet,**
**dass** die rotationssymmetrische Umlenkoptik ein konisches Spiegelelement (3) ist, das einen Konuswinkel (α) von kleiner 30° aufweist, so dass die auftreffenden Laserstrahlen (41) direkt in eine Schweißebene (9), die einen Schweißabstand (A) zu der Abstrahlebene (8) aufweist, auf die innenliegenden Umfangsflächen (53) des in der Aufnahme (2) aufgenommenen Werkstücks (5) reflektiert werden.

2. Vorrichtung nach Anspruch 1, **dadurch gekennzeichnet, dass** das konische Spiegelelement (3) zur Beeinflussung der Strahlaufweitung der Laserstrahlen (41) senkrecht zu der Abstrahlebene (8) verstellbar ist.

3. Vorrichtung nach Anspruch 1, **dadurch gekennzeichnet, dass** das konische Spiegelelement (3) einen Konuswinkel (α) im Bereich von 2° bis 10° aufweist.

4. Vorrichtung nach Anspruch 1, **dadurch gekennzeichnet, dass** das Spiegelelement (3) eine konkav ausgeformte reflektierende Mantelfläche (31) aufweist.

## Claims

1. Device for transmission welding at two internal peripheral surfaces of a workpiece (5)
by means of laser beams (41) with a plurality of laser-lens modules (4), each comprising a high power diode laser and beam-forming optics, the laser-lens modules (4) being arranged at equal distances from each other on a circular line (7) and to the midpoint of the circular line (7) and each being configured so as to emit a divergent laser beam (41) with a beam axis (42) in a radiation plane (8) radially to the midpoint of the circular line (7),
rotationally symmetric deflection optics, with the body axis of the deflection optics being arranged perpendicular to the radiation plane (8) and extending through the midpoint of the circular line (7) and
a receptacle (2), in order to be able to arrange the workpiece (5) with two internal axially symmetric peripheral surfaces with its symmetry axis (6) coaxially to the body axis of the rotationally symmetric deflection optics, **characterized in that**,
the rotationally symmetric deflection optics is a conical mirror element (3) having a cone angle (α) of less than 30°, so that the impinging laser beams (41) are reflected directly into a welding plane (9), having a welding distance (A) to the radiation plane (8), onto the internal peripheral surfaces (53) of the workpiece (5) received in the receptacle (2).

2. Device according to claim 1, **characterized in that** the conical mirror element (3) is adjustable perpendicular to the radiation plane (8) for influencing the beam expansion of the laser beams (41).

3. Device according to claim 1, **characterized in that** the conical mirror element (3) has a cone angle (α) in the range of 2° to 10°.

4. Device according to claim 1, **characterized in that** the conical mirror element (3) has a concavely formed reflecting skin surface (31).

## Revendications

1. Dispositif de soudage par transmission à deux surfaces circonférentielles internes d'une pièce (5)
au moyen de faisceaux laser (41) comprenant plusieurs modules optiques à laser (4), qui sont chacun constitué d'un laser à diode de haute puissance et d'une optique de formation de faisceau, les modules optiques à laser (4) étant tous disposés sur une ligne de cercle (7) avec le même écartement entre eux et du centre de la ligne de cercle (7) et émettant un faisceau laser (41) divergent respectif avec un axe de faisceau (42) dans un plan de rayonnement (8), cette émission s'effectuant radialement vers le centre de la ligne de cercle (7),
une optique de déviation à symétrie de révolution, l'axe de corps de l'optique de déviation étant disposé perpendiculairement au plan de rayonnement (8) et traversant le centre de la ligne de cercle (7) et
un réceptacle (2), pour pouvoir disposer la pièce (5), avec deux surfaces circonférentielles internes à symétrie axiale, avec son axe de symétrie (6) de manière coaxiale à l'axe de corps de l'optique de déviation à symétrie de révolution, **caractérisé en ce que**,
l'optique de déviation à symétrie de révolution est un élément de miroir conique (3), ayant un angle de cône (α) inférieur à 30°, de sorte que les faisceaux laser (41) incidents sont réfléchi directement dans un plan de soudage (9), ayant une distance de soudage (A) au plan de rayonnement (8), sur les surfaces circonférentielles internes (53) de la pièce (5) reçue dans le réceptacle (2).

2. Dispositif selon la revendication 1, **caractérisé en ce que** l'élément de miroir conique (3) est ajustable perpendiculairement au plan de rayonnement (8) pour influencer l'expansion de faisceau des faisceaux laser (41).

3. Dispositif selon la revendication 1, **caractérisé en ce que** l'élément de miroir conique (3) a un angle de cône (α) dans la gamme de 2°à 10°.

4. Dispositif selon la revendication 1, **caractérisé en ce que** l'élément de miroir conique (3) a une surface latérale réfléchissante (31) de forme concave.
